# EUROPEAN PATENT SPECIFICATION

(11) **EP 2 274 471 B1**
(45) Date of publication and mention of the grant of the patent: **06.11.2013**
(21) Application number: 08736764.5
(22) Date of filing: 20.03.2008
(51) Int. Cl.: D21B 1/32

(54) **A METHOD FOR PULPING WASTE PAPER**
VERFAHREN ZUM AUFSCHLUSS VON ALTPAPIER
PROCÉDÉ POUR RÉDUCTION EN PÂTE DE PAPIER DE RÉCUPÉRATION

(43) Date of publication of application: 19.01.2011
(73) Proprietor: OVIVO LUXEMBOURGH S.a.r.l., 5365 Munschbach (LU)
(72) Inventor: HAUTALA, Jouko, FIN-33400 Tampere (FI)
(74) Representative: Nieminen, Taisto Tapani
(86) International application number: PCT/FI2008/000044
(87) International publication number: WO 2009/115636

(56) References cited:
- EP-A1- 1 826 314
- DE-A1-102004 015 011
- DE-A1-102004 015 011
- DE-B1- 2 757 580
- DE-B1- 2 757 580
- US-A1- 2007 199 905

## Description

Invention relates to a method for handling and pulping raw material comprising impurities and consisting of waste paper and/or cardboard and for processing pulp that can be obtained from coarse screening and pulping in order to be the pulp suitable for the paper making in which method the raw material is firstly preprocessed by adding dilution water to it, in the pulper container the raw material is smashed to be fibre and impurities are separated from it at several stages both with the help of the gravity and screening.

Pulping methods of waste paper are previously known from for example the publications WO 03/025279, FI-962446 and EP 1289664. Typically in these solutions second pulper is missing (WO 03/025279 and EP 1289664), a light rejection is not separated from the raw material and is not removed separately like the heavy rejection is removed. Furthermore diluted raw material is not attempted to be clarified in them in any way. Separating capacity of the impurities is small in known processes due to a small amount of separating devices belonging to the processes. Dilution water that can be returned to the pulper is not clarified so that impurities, like sand, can circle in the process. Due to this the known processes are suitable only for the raw materials that consist of recycling paper and which raw materials contain a small amount of impurities, 5 - 10 %. In the publication FI 962446 there is also no separation of the dispersed fibre before the low density pulper, the whole production of the first pulper runs through the scrap chamber and there is no clarification of the heavy rejection in the process before the second pulper, further the rejection of the coarse screening is returned back to the first pulper which causes wearing in the first pulper.

Publication EP 1826314 A1 discloses a method for suspending and cleaning paper raw materials containing contaminants. In the method paper raw material is mixed with water forming a suspension containing the contaminants wherein an unscreened partial flow of the suspension is pumped into a settling apparatus and into a closed screen apparatus; Further screening the partial flow then with a screen comprising: guiding an accepted stock flow, and accumulating the contaminants retained at the screen in the screen apparatus; discharging the contaminants from the screen apparatus continuously or at adjustable intervals, and guiding the discharge to a screening device; and recirculating a recirculation flow of the unscreened partial flow into the settling apparatus from a pressure line of the pump apparatus. In the method only one pulper is used and stock flow is obtained only from it. Recirculation flows from screens are guided also to said pulper via separate pumps.

In order to eliminate the faults and disadvantages mentioned above, a new method has been developed to which it is characteristic that the fibre mass is directed through a coarse screen from the pulper container to the vertical clarifier in which the impurities that are heavier than the water come down and in which the heavy rejection is removed from the bottom part and the flow of the remaining mixture and the light rejection is directed through the upper part of the mentioned clarifier to the subsidiary pulper whereupon pulp is being gathered in the method from the coarse screen and from the subsidiary pulper through the screening devices they contain.

The advantage of the method according to the invention is the fact that the process can handle waste paper raw material in which the concentration of the impurities can be up to 60 %. By impurities all other nearly undecomposable materials than paper and cardboard are meant. By it for example plastic is meant which impurity mostly forms the biggest part. The raw material can be any recycled fibre containing paper and/or cardboard preferably as preprocessed and crushed.

The raw material should not contain significant amounts of so called bio garbage to be composted. By preprocessing the raw material for example big, heavy fractions have been removed and iron impurities have been removed with the help of a magnet. A significant advantage is the fact that the process can be arranged to function with the help of the gravity in such a way that only one pump is needed for the purified pulp and another pump is circulating dilution water from which the impurities that are lighter and heavier than water have been separated to be removed from the process cycle with the help of the gravity. In addition to that water is purified with the help of a pressure by screening so that other impurities do not join the cycle. Gravity is utilized excellently in the process in order to separate impurities that are heavier and lighter than water which impurities are usually separated with the help of high density and low density centrifugal cleaners that use a lot of energy. Furthermore the process according to the invention requires less equipment than the traditional processes.

A significant advantage is also the fact that the delay of the mass increases in the clarifier 5. It is caused by the fact that the first separation of the pulp to the line 29 is performed before the clarifier 5 whereupon a lighter streaming runs through it. In the clarifier 5 the streaming upwards is more silent and its separation ability is thus better.

In the following the invention is described more detailed by referring to the accompanying drawing in which
Fig. 1 shows a process according to the invention diagrammatically.
Fig. 2 shows another process according to the invention diagrammatically.

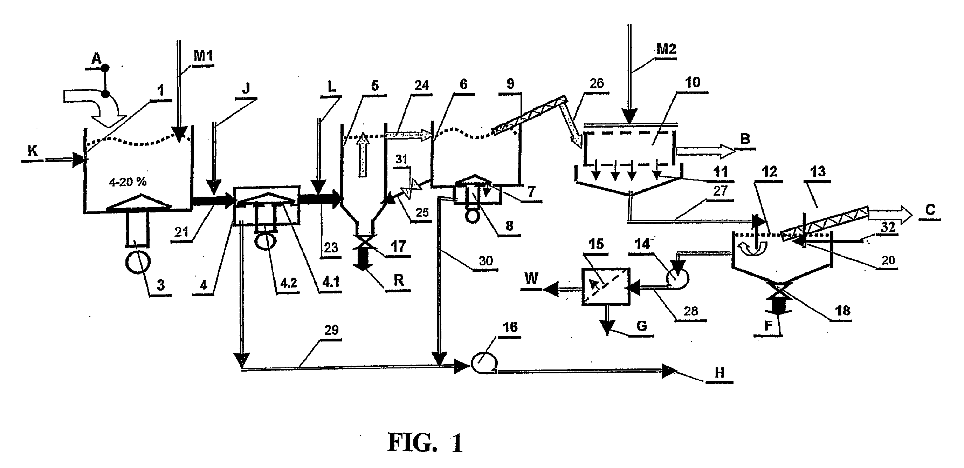

### Process 1, in the figure 1:

The desired stream of raw material and the dilution waters M1 and K it needs are measured out to the pulper 1. Paper and cardboard are mixed and smashed to be fibre in the pulper 1 with the help of a rotor 3. The total density of the pulper 1 is preferably more than 4 %, even 20 %. The pulper does not have a screening board. The contents of the pulper with fibre content are running continuously along the pipe 21 to a coarse screen 4. The mass coming from the pulper 1 along the pipe 21 is diluted with the streaming J to be suitable with the density of 3-5%. The paper/cardboard that is decomposed in the coarse screen 4 runs through the holes of the screening board 4.1 along the pipe 29 to the pump 16 and further to the next additional purifying stage or to a storage container. The screening surface 4.1 of the coarse screen 4 is usually an aperture disk in which the diameter of the holes is 2 - 5 mm.

The part of the raw material that has not yet decomposed in the pulper 1 and cannot go through the screen plate 4.1 of the coarse screen 4, runs along the pipe 23 to the vertical clarifier 5. Dilution water L is dosed to the pipe 23 so much that the density of the mixture being in the vertical pipe is under 2 %, preferably even 1 %. The diameter of the vertical pipe is measured in such a way that the streaming being directed upwards is under 0,5 m/s, preferably under 0,2 m/s. This low density and small speed upwards make sure that the fractions that are heavier than water come down on the bottom of the vertical pipe 5 from which they are removed with the help of a device 17 that is a traditional double valve system at its simpliest form. The fraction to be removed R contains various metals depending on the raw material A, plastics that are heavier and harder than water, small stones, glass and for example sand. The fractions that are lighter than water and come to the pulper 1 along the raw material A run from the pulper 1 through the pipe 21, through the coarse screen 4 and the pipe 23 to the vertical clarifier 5 and they do not end up being in the pipe 29.

One significant light fraction is a Styrox material used in the packages. These fractions that are lighter than water in the vertical pipe 5 rise up because of the buoyancy and stream with the rest of the mixture along the pipe 24 located in the upper part of the vertical pipe 5 to the subsidiary pulper 6. Still undecomposable paper and cardboard are decomposed in the subsidiary pulper 6 with the help of a rotor 8. After they have been decomposed to be fibre they run through the screen plate 7 to the pipe 30 and further along the pipe 29 to the pump 16. The size of the holes of this screen plate is usually the same as the size of the holes of the coarse screen 4.1 i.e. 2- 5 mm. So the pulper works as coarse screen at same time. Heavy fractions that ended up being in the pulper 6 are directed through the pipe 25 back to the vertical pipe with the help of a closing device 31. Light rejection and the undecomposable material, like plastic are collected from the surface of the subsidiary pulper 6 with the help of a screw 9. These fractions run from the screw 9 through the pipe 26 inside the washing drum 10. In this rotating washing drum that has gaps, usually holes in its casing, the diameter of which is 6 - 15 mm, the materials are being washed with the help of a coarse fraction water M in such a way that fibres and small, light fractions separated from the fraction will be delivered by the water along the pipe 27 to the mid part 19 of the clarifier 12. With the amount of the water M the density of the water running to the clarifier 12 is being regulated in such a way that it could be clearly lower than 1 %, preferably about/approximately 0,5 %.

The water with fibre content runs under the mid part to the uppermost part of the clarifier 12 from which it gets pumped to be purified with a device 15. All the fractions that are lighter than water stay in the mid part 19 of the clarifier and they are removed with the screw conveyor 13 for further processing. The fractions that are heavier than water, like small sized sand can come down on the bottom of the clarifier. This fraction F that is heavier than water is removed with the help of a removal device 18 from the clarifier 12. The removal device 18 can be same as the removal device 17 for a heavy fraction.

The clarifier can also have another size. The most important thing is the fact that it separates the light and the heavy fraction from each other. There is a screen plate in the purifier/sorter of the water with fibre content which screen plate has holes or gaps and the diameter of the holes is usually 1 - 4 mm. With the help of this purifier it is ensured that the impurities gone through the holes of the washing drum 10 do not start streaming with the water with fibre content. The impurities G separated in the purifying of the water with fibre content have to be processed further and the water that ran through the screen surface is directed at least to the following dilutions J, K and L of the process.

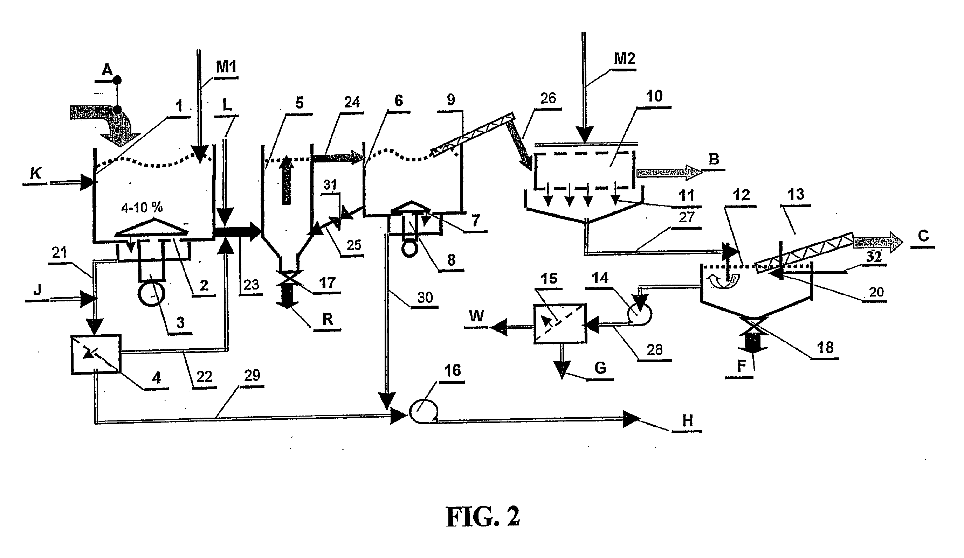

### Process 2, figure 2:

This differs from the diagram of the figure 1 in such a way that there is a screen plate 2 in the pulper 1 due to which septic density in the pulper 1 is 4 - 10 %. Pulp that has been running through the screen plate 2 runs to the coarse screens 4 and the fiberized material runs through the screen plate 4.1 to the pipe 29 and along that to the pump 16 that pumps it to the next additional purification stage or to a storage container. The screening surface 4.1 of the coarse screen is usually a aperture disk in which the diameter of the holes is 2 - 5 mm. The part of the raw material that has not yet decomposed in the pulper 1 and cannot get through the screen plate 2 of the pulper runs through the pipe 23 to the clarification pipe 5. The screen plate of the pulper 1 is usually a aperture disk in which the diameter of the holes is 6 - 20 mm. The material that cannot penetrate the screen plate 4.1 of the coarse screen 4 runs through the pipe 22 to the pipe 23 and further to the clarification pipe 5. Dilution water L is dosed to the pipe 23 so much that the density of the mixture is under 2 %, preferably even about 1 %.

There are at least two screen surfaces in the process solution of the both figures, a clarification basin 5 in which gravitational clarification occurs and both removal from the bottom of the clarification basin and from the surface part whereupon heavy and light impurities can be separated. In addition to that there is the purification of the washing waters of the rejection in the process solution. Firstly light and heavy fractions are separated and in addition to that the water is purified with the screen surface 15. In the solution of the process no carbage is being recycled and especially no heavy impurities a part of which returns back to the pulper 1 and cause the wearing of the rotor of the pulper and the screen deck in the traditional processes. Due to these arrangements high impurity concentrations can be allowed in the raw material that is brought to the process. However the pulp produced by the process is clean enough for the next purification stage in which the fibre is purified to be a suitable mass in order to manufacture paper or paperboard. In both diagrams fractions with fibre and sand content, which became created during the additional purification of the fibre, for example the rejection of the low density centrifugal cleaning, can be brought along the line 32 to the clarifier 12 shown in the both diagrams in order to separate sand and gather the fibre.

## Claims

1. Method for handling and pulping raw material consisting of waste paper and/or cardboard containing impurities and in order to process pulp that can be obtained from the pulping to be the pulp suitable for the paper making by using in said method a vertical clarifier (5), a coarse screen (2),(4) and a subsidiary pulper (6) as needed devices, in which method the raw material is firstly preprocessed by adding dilution water to it, then it is pulped in the pulper container (1) and first fibre separation is carried out by smashing the raw material to be fibre, and further impurities are separated from it at several stages with the help of a gravity and with the help of a screening, wherein a fibre mass is directed from the pulper container (1) to the vertical clarifier (5) through the coarse screen (2), (4) when the said first fibre separation has been performed in which clarifier (5) the impurities that are heavier than the water come down and from which the heavy rejection is removed from the bottom part and the flow of the remaining mixture and the light rejection is directed to the subsidiary pulper (6) through the upper part of the mentioned clarifier (5), whereupon in the method the pulp is being gathered from the coarse screen (2); (4) and from the subsidiary pulper (6) through screening devices (2); (4.1), (7) they contain.

2. Method according to the claim 1, **characterized in that** the flow of the mass from the pulper (1) to the subsidiary pulper (6) occurs with the help of gravity.

3. Method according to the claim 1, **characterized in that** in the method, in the screen (2); (4.1) of the coarse screen, the same hole size of the screen is used than in the screen (7) of the subsidiary pulper (6).

4. Method according to the claim 1, **characterized in that** the mass containing impurities is removed from the upper part of the subsidiary pulper (6) and water to be removed from the subsidiary pulper and containing impurities is purified and clarified and directed back to the pulper (1) to be additional dilution water.

5. Method according to the claim 1, **characterized in that** the flow achieved with the help of the process is maintained during the process and is directed out of there by using the one and same pump (16).

6. Method according to the claim 1, **characterized in that** the screens (2); (4.1); (7) of the coarse screen (2); (4) and the subsidiary pulper (6) are cleaned with the help of the rotating rotors (3); (4.2); (8).

7. Method according to the claim 1, **characterized in that** the first pulp flow is separated with the help of a screen plate (2) in the pulper (1) towards the pump (16).

8. Method according to the claim 1, **characterized in that** pulp flow that is smashed is directed away towards the first screen plate (4.1) with the help of a rotor (3).

9. Method according to the claim 1, **characterized in that** speed of the flow speed of the mass upwards in the clarifier (5) is reduced with the help of the first separation of the pulp occuring before the clarifier.

10. Method according to the claim 1, **characterized in that** the heavy rejection is separated in the vertical clarifier (5) from the mass having density rate that is under 2 %.

## Patentansprüche

1. Verfahren zur Bearbeitung und zum Aufschluss eines Unreinigkeiten enthaltenden aus Altpatpier und/oder aus Karton bestehenden Rohstoffs und zur Verarbeitung des aus dem Aufschluss zu gewinnenden Faserstoffes zum für die Papierherstellung geeigneten Faserstoff, in welchem Verfahren der Rohstoff zuerst durch Beigabe von Verdünnungswasser vorverarbeitet wird, im Aufschlussbehälter (1) durch Auflösen des Rohstoffes zu Fasern desintegriert wird, und daraus Unreinigkeiten in mehreren Phasen durch Gravitation sowie durch Siebung separiert werden, **dadurch gekennzeichnet, dass** im Aufschlussbehälter der Faserstoff durch den Grobsortierer nach der Durchführung der ersten Faserseparierung in die Vertikalaufklärer (5) geleitet wird, wo sich die schwereren Unreinigkeiten senken und woraus der schwere Spuckstoff aus dem Bodenteil beseitigt wird und der Verlauf der Endmischung sowie des leichten Spuckstoffes durch den genannten Aufklärer (5) in den subsidiären Pulper (6) gesteuert wird, wobei in dem Verfahren der Faserstoff aus dem Grobsortierer (2, 4) und subsidiären Pulper (6) über die von diesen enthaltenden Siebvorrichtungen (2, 4.1, 7) gesammelt wird.

2. Verfahren nach dem Anspruch 1, **dadurch gekennzeichnet, dass** der Verlauf des Faserstoffes aus dem Pulper (1) in den subsidiären Pulper (6) durch Gravitation erfolgt.

3. Verfahren nach dem Anspruch 1, **dadurch gekennzeichnet, dass** beim Verfahren im Sieb des Grobsortierers (2, 4.1) die gleiche Maschenweite wie im Sieb (7) des subsidiären Pulpers (6) verwendet wird.

4. Verfahren nach dem Anspruch 1, **dadurch gekennzeichnet, dass** der Unreinigkeiten enthaltende Stoff aus dem Oberteil des subsidiären Pulpers (6) und aus dem subsidiären Pulper, Unreinigkeiten enthaltendes Wasser gereinigt und aufgeklärt und zurück in den Pulper (1) als zusätzliches Verdünnungswasser geleitet wird.

5. Verfahren nach dem Anspruch 1, **dadurch gekennzeichnet, dass** die durch den Prozess geschaffene Faserströmung im Prozess aufbewahrt und daraus mit Hilfe einer und derselben Pumpe (16) herausgeführt wird.

6. Verfahren nach dem Anspruch 1, **dadurch gekennzeichnet, dass** die Siebe (2, 4.1, 7) des Grobsortierers (2, 4) und des subsidiären Pulpers (6) mittels rotierender Rotoren (3, 4.2, 8) gereinigt werden.

7. Verfahren nach dem Anspruch 1, **dadurch gekennzeichnet, dass** im Pulper (1) mit Hilfe einer Siebplatte (2) die erste Faserstoffströmung gegen die Pumpe (16) separiert wird.

8. Verfahren nach dem Anspruch 1, **dadurch gekennzeichnet, dass** im Pulper (1) die mit Hilfe des Rotors (3) aufgelöste Faserstoffströmung gegen die erste Siebplatte (4.1) weggeleitet wird.

9. Verfahren nach dem Anspruch 1, **dadurch gekennzeichnet, dass** die Strömungsgeschwindigkeit des Stoffes aufwärts im Aufklärer (5) mit Hilfe der vor dem Aufklärer erfolgenden ersten Separierung des Faserstoffs verkleinert wird.

10. Verfahren nach dem Anspruch 1, **dadurch gekennzeichnet, dass** der schwere Spuckstoff im Vertikalaufklärer (5) aus dem Stoff separiert wird, dessen Konsistenzstufe unter 2 % liegt.

## Revendications

1. Un procédé pour la réduction en pâte de papier de récupération et/ou de carton contenant des impuretés ainsi que pour transformer la pâte résultant de la réduction en pâte qui convient à la fabrication du papier en utilisant dans ledit procédé un clarificateur (5), une trame grossière (2) ; (4) et un pulpeur auxiliaire (6) comme systèmes nécessaires, dans lequel procédé, la matière première est d'abord prétraitée en y ajoutant de l'eau de dilution et en la battant et transformant en fibres dans le récipient de triturateur (1), après quoi la première séparation de fibres est effectuée en désintégrant la matière première en fibres, et, par la suite, les impuretés en sont séparées en plusieurs stades à l'aide de la gravité et d'un criblage, où la pâte de fibres est dirigée du récipient de triturateur (1) au clarificateur vertical (5) à travers le tamis grossier (2) ; (4) après ladite première séparation, dans lequel clarificateur (5) les impuretés plus lourdes que l'eau descendent et duquel le rejet lourd est retiré de la partie inférieure, et l'écoulement du mélange restant et du rejet léger est dirigé au triturateur auxiliaire (6) à travers la partie supérieure dudit clarificateur (5) après quoi, dans ce procédé, la pâte est rassemblée du tamis grossier (2), (4) et du triturateur auxiliaire (6) à travers les dispositifs de criblage (2) ; (4.1) ; (7) qu'ils contiennent.

2. Un procédé selon la revendication 1, **caractérisé en ce que** l'écoulement de la pâte du triturateur (1) au triturateur auxiliaire (6) s'effectue à l'aide de la gravité.

3. Un procédé selon la revendication 1, **caractérisé en ce que**, dans ce procédé, dans le crible (2) ; (4.1) du tamis grossier, la même taille de trous est utilisée que dans celui du triturateur auxiliaire (6).

4. Un procédé selon la revendication 1, **caractérisé en ce que** la pâte contenant des impuretés est retirée de la partie supérieure du triturateur auxiliaire (6) et que l'eau qui doit être retirée du triturateur auxiliaire et qui contient des impuretés est purifiée et clarifiée et renvoyée au triturateur (1) pour y constituer l'eau de dilution supplémentaire.

5. Un procédé selon la revendication 1, **caractérisé en ce que** l'écoulement obtenu à l'aide du procédé est maintenu pendant le procédé et dirigé hors du procédé à l'aide d'une seule et même pompe (16)

6. Un procédé selon la revendication 1, caractérisé en que les cribles (2) ; (4.1) ; (7) du tamis grossier (2) ; (4) et le triturateur auxiliaire (6) sont nettoyés à l'aide de rotors en rotation (3) ; (4.2) ; (8).

7. Un procédé selon la revendication 1, caractérisé en que, dans le triturateur (2), le premier écoulement de pâte est séparé à l'aide d'une plaque de criblage vers la pompe (16).

8. Un procédé selon la revendication 1, caractérisé en que l'écoulement de la pâte désintégrée est dirigé hors du triturateur et vers la première plaque de criblage (4.1) à l'aide d'un rotor (3).

9. Un procédé selon la revendication 1, caractérisé en que la vitesse de l'écoulement de la pâte vers le haut dans le clarificateur (5) est diminuée à l'aide de la première séparation de la pâte s'effectuant avant le clarificateur.

10. Un procédé selon la revendication 1, caractérisé en que, dans le clarificateur (5), le rejet lourd est séparé de la pâte dont la densité est inférieure à 2 pour cent.
